# EUROPEAN PATENT SPECIFICATION

(11) **EP 1 038 075 B1**
(45) Date of publication and mention of the grant of the patent: **15.09.2004**
(21) Application number: 98958412.3
(22) Date of filing: 04.11.1998
(51) Int. Cl.: E04C 2/36, E04B 1/94

(54) **HEAT RESISTANT COMPOSITE PANELS**
HITZEBESTÄNDIGE VERBUNDPLATTE
PANNEAU AGGLOMERE RESISTANT A LA CHALEUR

(30) Priority: 06.11.1997 NO 975108
(43) Date of publication of application: 27.09.2000
(73) Proprietor: Bjordal, Geir Petter, 6012 Alesund (NO)
(72) Inventor: Bjordal, Geir Petter, 6012 Alesund (NO)
(74) Representative: Rees, David Christopher
(86) International application number: PCT/NO1998/000331
(87) International publication number: WO 1999/024682

(56) References cited:
- EP-A1- 0 552 573
- EP-A1- 0 568 270
- SE-C- 225 374
- US-A- 3 998 023
- US-A- 4 299 872
- US-A- 4 526 830
- US-A- 4 557 961
- US-A- 4 598 007
- US-A- 5 022 208

## Description

### Field of invention

The present invention relates to heat resistant composite panels, particularly for use in the construction of walls, ceilings, floors and other parts of offshore installations as well as for the use in houses, containers and other buildings and constructions.

### Background art

It is known a plurality of different panels for the use in walls, ceilings, floors and similar building parts in ships, offshore installations, houses, containers or the like. Thus EP-A 568270 discloses a composite panel comprising a core having a honeycomb structure made from a natural fibre material such as kraft paper, where the core is impregnated with a liquid composition comprising a thermosetting resin and where the cells of the core is filled with a filler composition such as expanded perlite and with a material which rdeases water at elevated temperatures. The core has on its outer sides sheets made from a natural fibre material such as corrugated cardboard impregnated with a thermosetting resin. The composite panel according to EP-A 568270 does however have a very limited fire resistance and will in addition be to heavy for the use on ships and in offshore installations.

US-A-3998023 discloses a heat resistant composite panel including a core with a honeycomb structure made from a non-metallic material in which the cells are filled with an insulating material such as expanded silicate. The panels include sheets affixed to each side of the core which may be of aluminium.

### Disclosure of invention

It s an object of the present invention to provide a composite panel which is very heat resistant, has a good thermal insulation ability, has a low weight and is easy to install.

Accordingly, the present invention relates to a heat resistant composite panel comprising a core having a honeycomb structure made from a non-metallic material where the cells of the core are filled with a particulate mineral material or with a mineral or ceramic fibre material, wherein said composite panels further comprises sheets of aluminium or an aluminium alloy affixed to each side of the core characterised in that the composite panels further comprise a high temperature resistant glass fibre cloth affixed to the outside of at least one of the sheets of aluminium or aluminium alloy.

According to a preferred embodiment at least one of the ends of the composite panel has on the inside of the sheets of aluminium or aluminium alloy means for connecting two composite panels together, said means comprising substantially rectangular grooves which grooves are intended to face each other when two composite panels are facing each other, and where said grooves are intended for receiving connecting elements.

The honeycomb structure as used in the specification and claims shall mean an integral assembly of pipes, preferably of six-sided cross-section. The pipes are preferably made from impregnated paper. The thickness of the core can vary according to the intended use of the composite panels, but is preferably between 10 and 200 mm. The thickness of the core is chosen in accordance to the degree of noise insulation required such that where a high degree of noise insulation is required the thickness of the core is high. A more preferred thickness of the core is between 30 and 60 mm. A composite panel having a good noise insulation is thereby obtained. In order to obtain a high stiffness of the composite panel , the core has preferably a cell diameter between 5 and 15 mm. A low cell diameter gives a high stiffness and the stiffness decreases with increasing cell diameter.

The particulate mineral filler material in the cells of the core is preferably expanded perlite which has a very high heat resistance. However, other heat resistant particulate mineral material or ceramic or mineral fibre materials can be used.

The aluminium or aluminium alloy sheets used in the composite panel of the present invention can have a thickness from about 0.7 mm and greater. In order to obtain a high stiffness of the composite panel it is preferred to use aluminium or aluminium alloy sheets having a thickness of about 1 mm. The upper limit of the thickness of the aluminium or aluminium alloy sheets is restricted by the weight ofthe composite panel.

As high temperature heat resistant glass fibre cloth it is preferred to use a glass fibre cloth as disclosed in Norwegian Patent application No. 820919. This glass fibre cloth has one or more polymer-based coatings to which there has been added flame retarding agents. Suitable polymers comprises chloride-containing polymers such as polyvinyl chloride, polyvinyl chloride acetate copolymer, acrylic vinyl chloride latex or ethylene chloridine chloride polymers. Alternatively the polymer can be polychloride propene (Neopren), chloride sulfonate polyethers or silicone rubber. The flame retarding agents are preferably antimony pentoxide and/or antimony trioxide with aluminium trihydrate as a filler. This glass fibre cloth has a very high resistance to heat and a very low heat conductivity and when exposed to high temperature the glass fibre cloth does not release any hazardous gases.

According to a preferred embodiment the grooves near the ends of at least one of the short sides of the composite panel are formed by bending the aluminium or the aluminium alloy sheets in order to form substantially rectangular grooves where the thickness of the grooves are substantially less than the thickness of the core. In this way heat bridging across the core is avoided.

The composite panel according to the present invention has a very low weight A composite panel according to the present invention having a total thickness of 35 mm will thus have a weight of 10 kg/m² while conventional fire resistant panels have a weight of 20 kg/m² and a thickness of 50 mm.

It has surprisingly been found that the composite panel according to the present invention satisfies very strict requirements as to heat resistance in connection with fires. Even though the sheets of aluminium or aluminium alloy have a melting point of about 650 - 700°C it has been found that the composite panels according to the present invention can withstand much higher temperatures for longer periods of time.

Due to its low eight, instalment of the composite panel according to the present invention is much more easy and cost effective than conventional fire resistant panels.

### Short description of the drawings

Figure 1 is a perspective view of a composite panel according to the present invention,
Figure 2 is a cross-section through two composite panels placed end by end,
Figure 3 is a cross-section trough two composite panels connected perpendicularly to each other,
Figure 4 is a cross-section though a member for connecting two composite panels,
Figure 5 is a diagram showing the temperature as a function of time for a test furnace used for testing the fire resistance of the composite panel according to the present invention,
Figure 6 is a diagram showing the temperature as a function of time for the non-exposed surface of the composite panel during testing of the composite panel,
Figure 7 shows the positions of thermocouples for measuring the temperature during fire testing of the composite panels.

### Detailed description of the invention

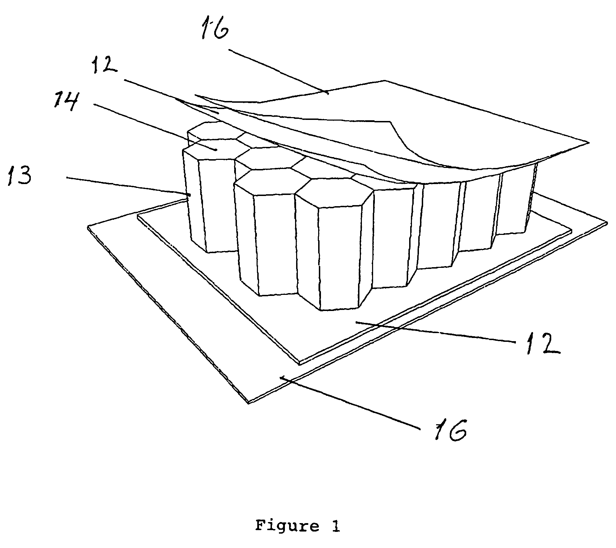

Figure 1 shows a composite panel according to the present invention. The composite panel comprises two sheets 11,12 of aluminium or aluminium alloy affixed to opposite sides of a core 13. The sheets 11,12 may for example have a thickness of 1 mm. The core 13 is made from impregnated paper and has a cellular form or a so-called honeycomb structure; that is an integral assembly of pipes preferably having a six-sided cross-section. The cells in the core 13 are filled with a heat resistant material 14 preferably consisting of porous particles having a grain size between 0.1 and 1 mm, or with mineral or ceramic fibres. With heat resistant material it shall be understood a material which can resist a fire in Class B 30 or better. A preferred material is expanded perlite which can be produced by burning perlite, which is a volcanic mineral, at high temperatures of about 900° C, whereby water is released. Perlite may contain 65 - 80 % by weight of SiO₂ and 12 - 16 % by weight of Al₂O₃ and has a density between 35 and 200 kg/m².

Alternatively it can be used other minerals which can be brought into a porous, granular form and which has a similar density and heat resistance.

The core 13 is affixed to the sheets 11,12 by means of a layer of glue which can be applied in the form of a foil and activated by means of heat or radiation. Alternatively the glue can be applied as a liquid such as for example a one or two component polyurethane glue.

To the outside of at least one of the sheets 11, 12 of aluminium or aluminium alloy there is affixed a heat resistant glass fibre cloth 16. The glass fibre cloth 16 is affixed to the sheets 11, 12 by means of a glue layer which can be applied in the form of a foil or which can be an integral part of the glass fibre cloth. The layer of glue can be activated by means of heat or radiation. Alternatively the glue can be applied as a liquid such as for example a one or two component polyurethane glue.

As high temperature heat resistant glass fibre cloth it is preferred to use a glass fibre cloth as disclosed in Norwegian Patent application No. 820919. This glass fibre cloth has one or more polymer-based coatings to which there has been added flame retarding agents. Suitable polymers comprises chloride-containing polymers such as polyvinyl chloride, polyvinyl chloride acetate copolymer, acrylic vinyl chloride latex or ethylene chlordane chloride polymers. Alternatively the polymer can be polychloride propene (Neopren), chloride sulfonate polyethers or silicone rubber. The flame retarding agents are preferably antimony pentoxide and/or antimony trioxide with aluminium trihydrate as a filler.

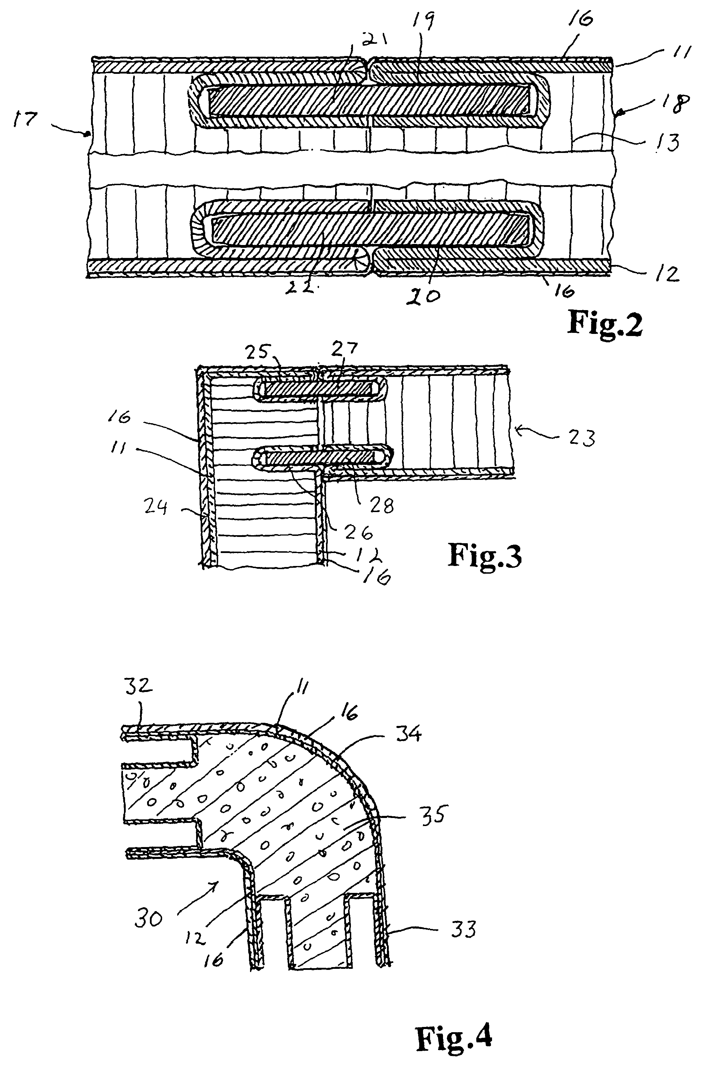

In figure 2 there is shown a cross-section through two composite panels 17, 18 which are joined together. In each of the composite panels 17, 18 the aluminium or aluminium alloy sheets 11, 12 are bended to form channels or grooves 19, 20 of substantially rectangular cross-section at the edge of the composite panels. The sheets 11, 12 have on their outer sides a glass fibre cloth 16. The grooves 19, 20 are extending into the core 13 in such a way that the grooves in adjacent composite panels are facing each other. In this way the core 13 continue from one composite panel to the next one without any formation of heat bridges in the area of the joint between the composite panels. In each of the grooves 19, 20 there are inserted connecting members 21, 22 in such a way that the parts of the sheets 11, 12 which forms the grooves, are pressing against the connecting members21, 22. In this way the edges of the composite panels 17, 18 are connected by a sealed joint which prevents penetration of dust or the like. The cores 13 in each of the composite panels 17, 18 will be in contact with each other when the two composite panels are joined together.

The connecting members 21, 22 are preferably in the form of open profiles made from aluminium or steel and are preferably filled with a heat resistant mineral or ceramic fibre material or with a heat resistant particulate material.

In figure 3 there is shown two composite panels 23 and 24 connected to each other at an angle of 90°. The composite panel 23 is identical to the composite panels shown in figure 2. In the composite panel 24 the sheet 11 is bended to form two grooves 25, 26, which grooves have their openings on the side of the composite panel 24 facing the composite panel 23, one outer groove 25 and one inner groove 26 located at a distance from the edge of the composite panel 24, said distance corresponding to the thickness of the composite panel. The composite panels 23, 24 have on their outer sides affixed a glass fibre cloth 16. The two composite panels 23, 24 are joined together by means of connecting members 27, 28 inserted into the grooves . It will be seen that for both kind of connections of the composite panels shown in figures 3 and 4 the connecting members are separated by the core 13. This will ensure a safe connection which will prevent heat penetration when the joint is exposed to fire.

In figure 4 there is shown an arc-shaped panel 30 for connection of two composite panels according to the present invention. By using the arc -shaped panel 30 two composite panels can be connected perpendicularly to each other. The arc-shaped panel 30 comprises two outer sheets 11, 12 of aluminium or aluminium alloy having affixed on their other side a glass fibre cloth 16. The arc-shaped panel 30 has a core 35 which may be identical to the core 13 described above. The arc-shaped panel 30 has on its end sides rectangular grooves 32, 33 formed by bending the aluminium or aluminium sheets 11, 12. The arc-shaped panel 30 is connected to the composite panels by means of connecting members as described above.

The composite panels according to the present invention are joined together by inserting connection members into the grooves in one composite panel whereafter another composite panel is placed adjacent the first composite panel and then forced against the connection members until the connection members are pressed into the grooves in the second composite panel. Thereafter any empty spaces in the joint is filled with a particulate or fibre material. For most uses the joint between the composite panels will be tight and smooth and does not need any aftertreatment. Alternatively, one or both of the connecting members are permanently affixed in the grooves of one composite panel whereby the connecting members will extend out from the end of the composite panel. The composite panel of the present invention is primarily used for walls in different kinds of living quarters and rooms for technical installations on shore, on ships and on offshore structures. Further the composite panels can be used for floors and ceilings. A noise resistance test has shown that for a composite panel having a thickness of 34 mm the noise level was reduced by 34 dB across the composite panel. The composite panels according to the present invention have further a substantially lower weight than conventional fire resistant panels.

In order to test the fire resistance of the composite panels according to the present invention, two composite panels joined together as shown in figure 2 were tested in a gas-fired test furnace. The test furnace had inner dimensions of 1m x 1 m x 1m. The heating of the test furnace was done according to a time/temperature curve as set out in IMO res A. 754. The test panels consisted of two panels according to the present invention, each panel being 1200 mm long and 600 mm wide and connected by a joint using connecting members made from aluminium profiles filled with mineral wool fibres. The panels where according to the embodiment shown in figures 1 and 2.

The honeycomb core was made form paper and had a thickness of 33 mm. The cells of the core were filled with expanded perlite having a particle size of 0 - 1 mm. On each side of the core there was affixed by gluing two aluminium sheets having a thickness of 1 mm. The glue was Casco Nobel, type Polyurethane, two-component, 1805 with hardener No. 1802.

To the outside of the aluminium sheets there were affixed by gluing a glass fibre cloth sold under the tradename Sandel delivered by Firesafe Product Corporation, USA. The same type of glue was used as the glue used for gluing the aluminium sheets to the core. The total weight of the two composite panels was 16 kg and the thickness was 35.7 mm.

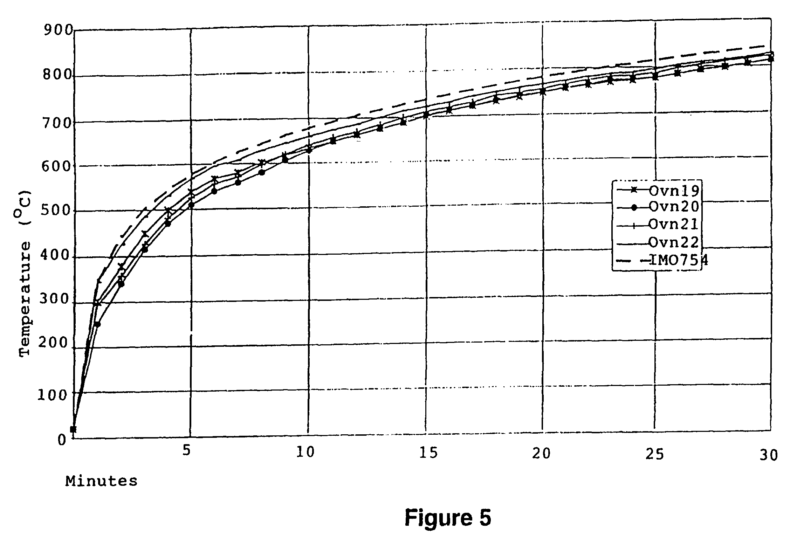

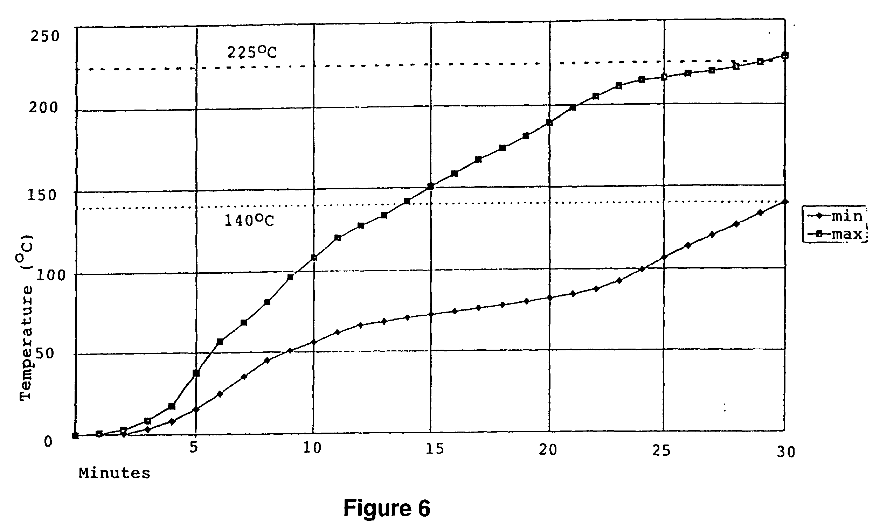

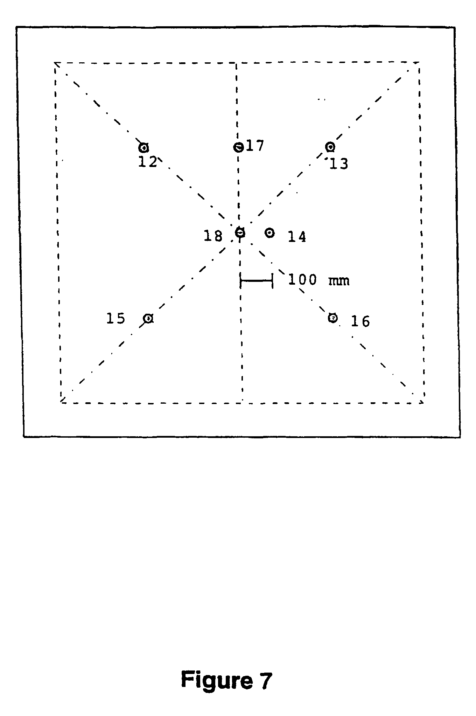

The test panels was placed in the open front of the test furnace as shown in figure 5. The test lasted for 30 minutes. In figure 6 there is shown the average temperature and the maximum temperature on the non-exposed side of the test panels during the test period. The temperature on the non-exposed side of the test panels was measured by seven thermocouples. The positions of the thermocouples are shown in figure 7.

As shown in figure 6 the highest average temperature during the test was 140 °C at the end of the test, while the highest maximum temperature was 225 °C. the maximum temperature was measured with one of the thermocouples placed in the joint between the two test panels. No penetration of hot gases or flames were observed during the test. The only observation made was a small leakage of smoke in part of the joint between the two panels. The test showed that the composite panels according to the present invention have a very high resistance against fire and fulfils the requirements to fire resistance for such panels for the use in ships and on offshore structures.

## Claims

1. Heat resistant composite panel comprising a core (13) having a honeycomb structure made from a non-metallic material where the cells of the core (13) are filled with a particulate mineral material or with a mineral or ceramic fibre material (14), wherein said composite panels further comprises sheets (11,12) of aluminium or an aluminium alloy affixed to each side of the core (13), **characterised in that** the composite panels further comprise a high temperature resistant glass fibre cloth (16) affixed to the outside of at least one of the sheets (11,12) of aluminium or aluminium alloy.

2. Heat resistant composite panel according to claim 1, **characterized in that** at least one of the ends of the composite panel has on the inside of the sheets of aluminium or aluminium alloy (11, 12) means for connecting two composite panels together, said means comprising substantially rectangular grooves (19, 20) which grooves (19, 20) in one composite panel are intended to face the corresponding grooves in a second composite panelwhen two composite panels are facing each other, and where said grooves (19, 20) are intended for receiving connecting elements (21,22).

3. Heat resistant composite panel according to claim 1 or 2, **characterized in that** the honeycomb structure of the core (13) is made from impregnated paper.

4. Heat resistant composite panel according to claim 3, **characterized in that** the thickness of the core (13) is between 10 and 200 mm.

5. Heat resistant composite panel according to claim 1 - 4, **characterized in that** the core (13) has a cell diameter between 5 and 15 mm.

6. Heat resistant composite panel according to claim 1- 5, **characterized in that** expande perlite is used as a particulate mineral material in the cells of the core (13).

7. Heat resistant composite panel according to daim 1, **characterized in that** the sheets of aluminium or aluminium alloy (11, 12) have a thickness of at least 0.7 mm.

8. Heat resistant composite panel according to claim 1, **characterized in that** the glass fibre cloth (16) has one or more layers of a polymer-based material to which has been added a fire retarding agent.

9. Heat resistant composite panel according to claim 2, **characterized in that** the grooves (19, 20) is formed by bending the sheets of aluminium or aluminium alloy (11, 12).

10. Heat resistant composite panel according to claim 2, **characterized in that** in order to connect two composite panels perpendicularly to each other, one composite panel has grooves (25, 26) which grooves are arranged on one of the long sides of the composite panel.

11. Heat resistant composite panel according to claim 2, **characterized in that** the connecting members (21, 22) are in the form of hollow profils made from steel or aluminium where the hollow space is filled with a mineral or ceramic fibre material.

## Patentansprüche

1. Hitzebeständige Verbundplatte enthaltend einen Kern (13) mit einer zellenartigen Struktur aus einem nicht-metallischen Material, wobei die Zellen des Kerns (13) mit einem partikelförmigen mineralischen Material oder mit einem mineralischen oder keramischen Fasermaterial (14) gefüllt sind und wobei die Verbundplatte ferner Bleche (11,12) aus Aluminium oder einer Aluminiumlegierung aufweist, die an jeder Seite des Kerns (13) befestigt sind,
**dadurch gekennzeichnet,**
**daß** die Verbundplatte ferner ein hochtemperaturbeständiges Glasfasertuch (16) enthält, das an der Außenseite wenigstens eines der Bleche (11,12) aus Aluminium oder Aluminiumlegierung befestigt ist.

2. Hitzebeständige Verbundplatte nach Anspruch 1,
**dadurch gekennzeichnet,**
**daß** wenigstens ein Ende der Verbundplatte an der Innenseite der Bleche aus Aluminium oder Aluminiumlegierung (11,12) Mittel zum gegenseitigen Verbinden zweiter Verbundplatten aufweist, wobei die Mittel im wesentlichen rechtwinklige Nuten (19,20) enthalten, wobei die Nuten (19,20) in einer Verbundplatte entsprechenden Nuten in einer zweiten Verbundplatte gegenüberliegen, wenn zwei Verbundplatten einander zugewandt sind, und wobei die Nuten (19,20) dazu vorgesehen sind, Verbindungselemente (21,22) aufzunehmen.

3. Hitzebeständige Verbundplatte nach Anspruch 1 oder 2,
**dadurch gekennzeichnet,**
**daß** die zellenartige Struktur des Kerns (13) aus imprägniertem Papier besteht.

4. Hitzebeständige Verbundplatte nach Anspruch 3,
**dadurch gekennzeichnet,**
**daß** die Dicke des Kerns (13) zwischen 10 und 200 mm liegt.

5. Hitzebeständige Verbundplatte nach Anspruch 1 bis 4,
**dadurch gekennzeichnet,**
**daß** der Kern (13) einen Zellendurchmesser zwischen 5 und 15 mm hat.

6. Hitzebeständige Verbundplatte nach Anspruch 1 bis 5,
**dadurch gekennzeichnet,**
**daß** expandiertes Perlit als partikelförmiges mineralisches Material in den Zellen des Kerns (13) verwendet wird.

7. Hitzebeständige Verbundplatte nach Anspruch 1,
**dadurch gekennzeichnet,**
**daß** die Bleche aus Aluminium oder Aluminiumlegierung (11, 12) eine Dicke von wenigstens 0,7 mm haben,

8. Hitzebeständige Verbundplatte nach Anspruch 1,
**dadurch gekennzeichnet,**
**daß** das Glasfasertuch (16) eine oder mehrere Schichten aus einem Polymer-basiertern Material aufweist, dem ein brandverzögerndes Mittel hinzugefügt ist.

9. Hitzebeständige Verbundplatte nach Anspruch 2,
**dadurch gekennzeichnet,**
**daß** die Nuten (19,20) durch Biegen der Bleche aus Aluminium oder Aluminiumlegierung (11,12) geformt sind.

10. Hitzebeständige Verbundplatte nach Anspruch 2,
**dadurch gekennzeichnet,**
**daß** zu einer senkrecht zueinander liegenden Verbindung zweier Verbundplatten eine Verbundplatte Nuten (25,26) hat, die an einer der langen Seiten der Verbundplatte angeordnet sind.

11. Hitzebeständige Verbundplatte nach Anspruch 2,
**dadurch gekennzeichnet,**
**daß** die Verbindungselemente (21,22) die Form von Hohlprofilen aus Stahl oder Aluminium haben, wobei der Hohlraum mit einem mineralischen oder keramischen Fasermaterial gefüllt ist.

## Revendications

1. Panneau composite résistant à la chaleur comprenant un noyau (13) d'une structure en nid d'abeilles réalisée à partir d'un matériau non métallique dans lequel les cellules du noyau (13) sont remplies d'un matériau minéral particulaire ou d'un matériau constitué de fibres minérales ou céramiques (14), ledit panneau composite comprenant en outre des feuilles (11, 12) en aluminium ou en alliage d'aluminium fixées à chaque côté du noyau (13), **caractérisé en ce que** le panneau composite comprend en outre une toile en fibres de verre résistante aux hautes températures (16) fixée à l'extérieur d'au moins une des feuilles (11, 12) en aluminium ou en alliage d'aluminium.

2. Panneau composite résistant à la chaleur selon la revendication 1, **caractérisé en ce que** au moins une des extrémités du panneau composite présente à l'intérieur des feuilles en aluminium ou en alliage d'aluminium (11, 12) un moyen pour raccorder deux panneaux composites ensemble, ledit moyen comprenant des rainures (19, 20) essentiellement rectangulaires, lesquelles rainures (19, 20) d'un premier panneau composite sont destinées à faire face aux rainures correspondantes d'un second panneau composite lorsque deux panneaux composites se font face, et lesdites rainures (19, 20) étant destinées à recevoir des éléments de raccordement (21, 22).

3. Panneau composite résistant à la chaleur selon la revendication 1 ou 2 **caractérisé en ce que** la structure en nid d'abeilles du noyau (13) est réalisée à partir de papier imprégné.

4. Panneau composite résistant à la chaleur selon la revendication 3, **caractérisé en ce que** l'épaisseur du noyau (13) est comprise entre 10 et 200 mm.

5. Panneau composite résistant à la chaleur selon les revendications 1 à 4 **caractérisé en ce que** le noyau (13) a un diamètre de cellule compris entre 5 et 15 mm.

6. Panneau composite résistant à la chaleur selon les revendications 1 à 5, **caractérisé en ce que** de la perlite expansée est utilisée comme matériau minéral particulaire dans les cellules du noyau (13).

7. Panneau composite résistant à la chaleur selon la revendication 1, **caractérisé en ce que** les feuilles en aluminium ou en alliage d'aluminium (11, 12) ont une épaisseur d'au moins 0,7 mm.

8. Panneau composite résistant à la chaleur selon la revendication 1, **caractérisé en ce que** la toile en fibres de verre (16) présente une ou plusieurs couches d'un matériau à base de polymère auquel a été ajouté un agent ignifuge.

9. Panneau composite résistant à la chaleur selon la revendication 2, **caractérisé en ce que** les rainures (19, 20) sont formées par pliage des feuilles en aluminium ou en alliage d'aluminium (11, 12).

10. Panneau composite résistant à la chaleur selon la revendication 2, **caractérisé en ce que**, afin de relier deux panneaux composites perpendiculairement l'un à l'autre, un panneau composite présente des rainures (25, 26) qui sont disposées sur l'un des longs côtés du panneau composite.

11. Panneau composite résistant à la chaleur selon la revendication 2, **caractérisé en ce que** les éléments de raccordement (21, 22) ont la forme de profilés creux réalisés à partir d'acier ou d'aluminium, l'espace creux étant rempli d'un matériau constitué de fibres minérales ou céramiques.
